# EUROPEAN PATENT APPLICATION

(11) **EP 4 782 910 A1**
(43) Date of publication of application: **29.07.2026**
(21) Application number: 24866967.3
(22) Date of filing: 22.06.2024
(51) Int. Cl.: G02F 1/025, G02B 6/136

(54) **OPTICAL MODULATOR**

(30) Priority: 18.09.2023 CN 202322533194 U
(71) Applicant: Innolight Technology (Suzhou) Ltd., Suzhou, Jiangsu 215000 (CN)
(72) Inventor: YAN, Dongdong, Suzhou, Jiangsu 215000 (CN); LI, Xianyao, Suzhou, Jiangsu 215000 (CN)
(74) Representative: Becker, Eberhard
(86) International application number: PCT/CN2024/100814
(87) International publication number: WO 2025/060548

(57) **Abstract**

The present utility model relates to an optical modulator, comprising: a first dielectric layer; a second dielectric layer, which is located on the first dielectric layer, wherein a waveguide structure and first conductive layers are provided in the second dielectric layer, the waveguide structure is electrically connected to the first conductive layers by means of via holes, and the first conductive layers are used for adjusting light which is transmitted by means of the waveguide structure; an insulating layer, which is located on a waveguide layer; a third dielectric layer, which is located on the insulating layer, wherein second conductive layers are provided in the third dielectric layer, and the second conductive layers are electrically connected to the first conductive layers by means of via holes; and a shielding structure, which comprises a first shielding structure and a second shielding structure that are electrically connected to each other, wherein the first shielding structure is located in the second dielectric layer, the second shielding structure is located in the insulating layer and the third dielectric layer, and the first shielding structure and the second shielding structure enclose to form a cage, the waveguide structures, the first conductive layers and the second conductive layers being located in the cage. The optical modulator realizes electromagnetic shielding between a modulator and the outside, thereby improving the modulation performance.

## Description

This application claims the priority benefit to China patent application No. 202322533194.9, with an invention title, "OPTICAL MODULATOR", filed on September 18, 2023, in the China National Intellectual Property Administration. The entirety of the above-mentioned patent application is hereby incorporated by reference herein and made a part of this specification.

### Technical Field

The utility model relates to a field of optical communication technology, and in particular to an optical modulator.

### Related Art

An optical modulation system is generally composed of a driver and a modulator. Traveling wave electrode modulators are widely used due to the features of obtaining higher extinction ratio and being easy to integrate. The working principle is as follows. The driver is connected to the traveling wave electrode modulator through bonding wires. An optical waveguide is placed in the electric field of the traveling wave electrode. The driver outputs high-speed digital signals, the digital signals reach the traveling wave electrode modulator and propagate along the traveling wave electrode, and light waves propagate in the optical waveguide. The electric field changes brought by the high-speed digital signals in the traveling wave electrode cause the effective refractive index of the optical waveguide to change. Therefore, when the high-speed digital signals are transmitted on the traveling wave electrode, the electric field of the high-speed digital signals causes the refractive index of the optical waveguide to change, which causes the phase of the optical carrier to change, so that the optical carrier carries the digital signal information. The optical carrier interferes in the Mach-Zehnder interferometer at the back end, thereby completing the modulation.

During the modulation process, since the silicon-based traveling wave electrode modulator requires a larger driving voltage, the larger driving voltage generates larger electromagnetic radiation. The larger electromagnetic radiation causes interference to sensitive components, and also makes the modulator to have larger electromagnetic radiation, which affects the modulation performance of the modulator.

### Summary of the utility model

Based on this, it is necessary to provide an optical modulator to address the aforementioned technical issues, which can effectively shield electromagnetic radiation interference between the optical modulator and the external environment, thereby improving the modulation performance of the optical modulator.

In order to achieve the aforementioned purpose, the present application provides an optical modulator. The optical modulator includes:
a first dielectric layer;
a second dielectric layer, located on the first dielectric layer, where a waveguide structure and a first conductive layer are provided in the second dielectric layer, the waveguide structure is electrically connected to the first conductive layer by a via hole, and the first conductive layer is configured to modulate light transmitted by the waveguide structure;
an insulating layer, located on the waveguide layer;
a third dielectric layer, located on the insulating layer, where a second conductive layer is provided in the third dielectric layer, and the second conductive layer is electrically connected to the first conductive layer by a via hole;
a shielding structure, including a first shielding structure and a second shielding structure electrically connected to each other, where the first shielding structure is located in the second dielectric layer, the second shielding structure is located in the insulating layer and the third dielectric layer, the first shielding structure and the second shielding structure enclose to form a cage, and the waveguide structure, the first conductive layer, and the second conductive layer are located in the cage.

In one of the embodiments, the second conductive layer is electrically connected to the waveguide structure by a via hole, each of the first conductive layers, and each of the first conductive layers is stacked in a direction from the insulating layer toward the first dielectric layer.

In one of the embodiments, one of the second conductive layers is adjacent to the insulating layer and is electrically connected to the first conductive layer by the via hole, and each of the second conductive layers is stacked in a direction from the first dielectric layer toward the insulating layer.

In one of the embodiments, the total number of layers of the first conductive layer and the second conductive layer ranges from 6 to 8 layers.

In one of the embodiments, the first dielectric layer is a silicon layer or a glass material layer.

In one of the embodiments, the first dielectric layer is formed on the second dielectric layer through bonding.

In one of the embodiments, the first shielding structure includes a first metal layer and a first support layer located in the second dielectric layer, where the first metal layer is located on a side of the first conductive layer away from the insulating layer, the first support layer is located on both sides of the first conductive layer, and the first metal layer is electrically connected to the first support layer by the via hole;
the second shielding structure includes a second metal layer and a second support layer located in the third dielectric layer, where the second metal layer is located on a side of the second conductive layer away from the insulating layer, the second support layer is located on both sides of the second conductive layer, and the second metal layer is electrically connected to the second support layer by the via hole.

In one of the embodiments, the first support layer includes at least two first sub support layers arranged at intervals, the at least two first sub support layers are located in the second dielectric layer, and the at least two first sub support layers are located on both sides of the second conductive layer respectively, and an orthogonal projection of the first conductive layer toward the insulating layer is located within an orthogonal projection of the first metal layer toward the insulating layer.

In one of the embodiments, the second support layer includes at least two second sub support layers arranged at intervals, the at least two second sub support layers are located in the third dielectric layer, and the at least two second sub support layers are located on both sides of the first conductive layer respectively, and an orthogonal projection of the second conductive layer toward the insulating layer is located within an orthogonal projection of the second metal layer toward the insulating layer.

In one of the embodiments, the first dielectric layer is formed on the second dielectric layer through bonding.

In one of the embodiments, the shielding structure is provided with a hollow structure, and a hollow size of the hollow structure is less than 1/4 wavelength of the electromagnetic wave transmitted by the optical modulator.

In one of the embodiments, the insulating layer and the third dielectric layer are made of the same material.

In one of the embodiments, the shielding structure is insulated and separated from the first conductive layer and the second conductive layer.

The optical modulator mentioned above includes a first dielectric layer, a second dielectric layer, an insulating layer, a third dielectric layer, and a shielding structure. The waveguide structure of the second dielectric layer, the first conductive layer, and the second conductive layer of the second dielectric layer constitute the optical modulator. The shielding structure includes first shielding structure and second shielding structure electrically connected to each other. Since the cage enclosed by the first shielding structure and the second shielding structure surrounds the optical modulator, the shielding structure may limit the electromagnetic radiation of the optical modulator in the cage, and may also limit the external electromagnetic radiation outside the cage, which effectively shields the electromagnetic radiation of the optical modulator and reduces the interference of external electromagnetic radiation on the optical modulator. The electromagnetic shielding between the optical modulator and the external environment is achieved, thereby improving the modulation performance of the optical modulator. Moreover, the shielding structure may be simultaneously deposited during the process of forming the optical modulator structure, without the need to add additional process steps after the optical modulator is manufactured. Compared with the method in related art of adding structures to form electromagnetic shielding through mounting and wire bonding after the optical modulator is made, a solution according to this embodiment has fewer process steps and a better shielding effect.

### Brief description of the drawings

FIG. 1 is a schematic diagram of an XY section structure of an optical modulator according to an embodiment.
FIG. 2 is a schematic diagram of an XY section structure of an optical modulator according to another embodiment.
FIG. 3 is a schematic diagram of an XZ section structure of a first metal layer according to an embodiment.

### Description of reference numerals

10: first dielectric layer, 20: second dielectric layer, 210: waveguide structure, 211: waveguide, 212: contact structure, 213: slab structure, 220: first conductive layer, 30: insulating layer, 40: third dielectric layer, 410: second conductive layer, 50: shielding structure, 510: first shielding structure, 511: first metal layer, 512: first support layer, 512a: first sub support layer, 520: second shielding structure, 521: second metal layer, 522: second support layer, 522a: second sub support layer, 530: hollow structure, 60: via hole.

### Description of the embodiments

In order to facilitate understanding of the utility model, the utility model will be described more fully below with reference to the related drawings. The preferred embodiments of the utility model are shown in the drawings. However, the utility model may be implemented in many different forms and is not limited to the embodiments described herein. On the contrary, the purpose of providing these embodiments is to make the disclosure of the utility model more thorough and comprehensive.

Unless otherwise defined, all technical and scientific terms used herein have the same meaning as commonly understood by those skilled in the art of the utility model. The terms used herein in the specification of the utility model are only for the purpose of describing specific embodiments and are not intended to limit the utility model. The term "and/or" used herein includes any and all combinations of one or more related listed items.

In the description of the utility model, it should be understood that the orientation or positional relationships indicated by the terms "upper", "lower", "vertical", "horizontal", "inner", "outer", and the like are based on the method or positional relationships shown in the drawings, and are only for the convenience of describing the utility model and simplifying the description, rather than indicating or implying that the referred device or element must have a specific orientation, be constructed and operated in a specific orientation, and therefore should not be understood as a limitation on the utility model.

As stated in the related art, a modulator needs a large driving voltage for driving, and the large driving voltage generates large electromagnetic radiation, which in turn causes interference to some sensitive components. In view of this, the present application provides an optical modulator, which may effectively shield the electromagnetic radiation of the optical modulator to the external, and may also effectively reduce the interference of external electromagnetic radiation to the optical modulator, thereby improving the modulation performance of the optical modulator.

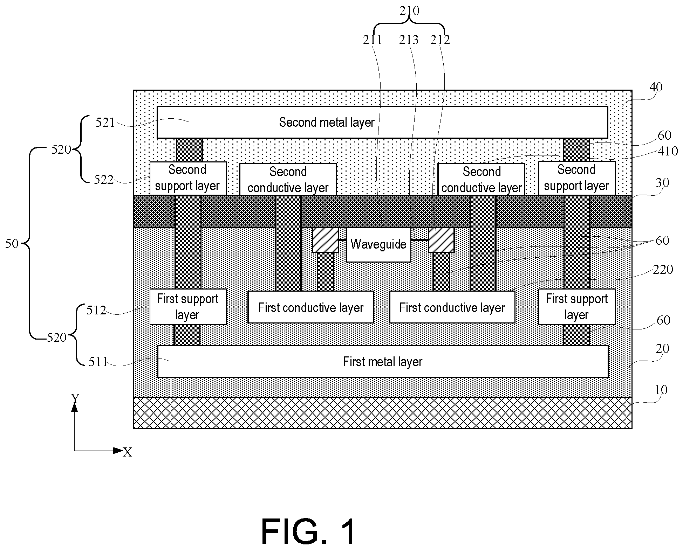

In an embodiment, as shown in FIG. 1, an optical modulator is provided. The optical modulator includes a shielding structure 50 and a first dielectric layer 10, a second dielectric layer 20, an insulating layer 30, and a third dielectric layer 40 stacked in sequence.

The second dielectric layer 20 is provided with a waveguide structure 210 and a first conductive layer 220. The waveguide structure 210 is electrically connected to the first conductive layer 220 by a via hole 60. The waveguide structure 210 is configured to transmit light. For example, the waveguide structure 210 may be made by etching the top silicon of a silicon-on-insulator (SOI), and may include a waveguide 211, a contact structure 212 formed by making doped regions on both sides of the waveguide 211, and a slab structure configured to connect the waveguide 211 and the doped structure 212. The third dielectric layer 40 is provided with a second conductive layer 410. The second conductive layer 410 is electrically connected to the first conductive layer 220 by a via hole 60. The second conductive layer 410 serves as a traveling wave electrode configured to transmit electromagnetic waves and modulate the light transmitted by the waveguide structure 210.

Exemplarily, the third dielectric layer 40 may be the same layer as the insulating layer 30. In other words, the third dielectric layer 40 and the insulating layer 30 are made of the same material. Exemplarily, the optical modulator may include multiple first conductive layers 220 located in the second dielectric layer 20. The second conductive layer 410 is electrically connected to the waveguide structure 210 by the via hole 60 and each first conductive layer 220. Each first conductive layer 220 is stacked in the direction from the insulating layer 330 toward the first dielectric layer 10. Exemplarily, the optical modulator may also include multiple second conductive layers 410. One second conductive layer 410 is located on the insulating layer 30 and is electrically connected to the first conductive layer 220 by the via hole 60. Each second conductive layer 410 is stacked by the via hole 60 in the direction from the first dielectric layer 10 toward the insulating layer 30. Exemplarily, the total number of layers of the first conductive layer 220 and the second conductive layer 410 may be 6 layers, 7 layers, or 8 layers, and a suitable total number of layers may be set according to requirements in practical applications.

The shielding structure 50 includes a first shielding structure 510 and a second shielding structure 520 electrically connected to each other. The first shielding structure 510 is located in the second dielectric layer 20, and the second shielding structure 520 is located in the insulating layer 30 and the third dielectric layer 40. The first shielding structure 510 is electrically connected to the second shielding structure 520 by the via hole 60. The first shielding structure 510 and the second shielding structure 520 enclose to form a cage, that is, a Faraday cage. The waveguide structure 210, the first conductive layer 220, and the second conductive layer 410 form an optical modulator with a "sandwich" structure, and are located in the cage. The shielding structure 50 is insulated and separated from the first conductive layer 220 and the second conductive layer 410 respectively.

Exemplarily, the first dielectric layer 10 may be a silicon layer or a glass material layer. The glass material includes but is not limited to silicon oxide, boron oxide, etc. The first dielectric layer 10 is equivalent to supporting silicon and functions as a substrate. Exemplarily, the second dielectric layer 20 and the third dielectric layer 40 may be any one or more of any suitable dielectric layers such as a silicon nitride layer and a silicon dioxide layer. Exemplarily, the second dielectric layer 20 and the third dielectric layer 40 may be made of multiple layer deposition of silicon dioxide and silicon nitride. Exemplarily, the insulating layer 30 may be an oxide layer, such as a silicon dioxide layer. Exemplarily, the insulating layer 30 and the third dielectric layer 40 may be made of the same material. For example, both the insulating layer 30 and the third dielectric layer 40 are silicon dioxide layers. Exemplarily, the waveguide structure 210 may be a silicon structure. The shielding structure 50 may be a metal structure, such as copper or aluminum. No limitation is made herein on the materials of each layer and each structure.

In practical applications, an optical modulator may be obtained by performing processes such as etching and deposition on an SOI wafer based on CMOS-SOI technology. The SOI wafer includes a substrate layer, an insulating layer 30, and a crystalline silicon layer stacked in sequence. First, the crystalline silicon layer is etched to form a waveguide structure 210 on the insulating layer 30, including a waveguide 211, a contact structure 212, and a slab structure. Next, through a doping process, the waveguide structure 210 is doped with carriers to form an electrical connection with the upper metal. Afterwards, a metal deposition process is performed to form a first conductive layer 220 electrically connected to the waveguide structure 210, a second dielectric layer 20 is deposited on the insulating layer 30, and the first conductive layer 220 is located in the second dielectric layer 20. Therefore, the waveguide structure 210 and the first conductive layer 220 form an old-style optical modulator in the related art.

Based on the aforementioned processes, in the present application, a first dielectric layer 10 may be formed on the second dielectric layer 20 through bonding, and the original substrate layer is removed. After the structure is inverted, the insulating layer 30 is etched to form the via hole, a metal deposition process is performed to form a second conductive layer 410 on the insulating layer 30, and a third dielectric layer 40 is further deposited on the insulating layer 30, where the second conductive layer 410 is located in the third dielectric layer 40. The first conductive layer 220 and the second conductive layer 410 form an electrical connection by the via hole. Based on this, the waveguide structure 210, the first conductive layer 220, and the second conductive layer 220 form a new optical modulator having a "sandwich" structure.

It should be noted that while forming the first conductive layer 210 and the second conductive layer 220, the first shielding structure 510 and the second shielding structure 520 may be simultaneously deposited to form a cage surrounding the "sandwich" structure configured to shield electromagnetic interference.

According to the aforementioned embodiments, the optical modulator includes a first dielectric layer 10, a second dielectric layer 20, an insulating layer 30, and a third dielectric layer 40 stacked from bottom to top, as well as a shielding structure 50. The waveguide structure 210 of the second dielectric layer 20, the first conductive layer 220, and the second conductive layer 410 of the third dielectric layer 40 constitute a new optical modulator having a "sandwich" structure. In the old optical modulator having a substrate layer, the silicon layer where the waveguide structure 210 is located is only separated from the substrate layer by a thickness of one insulating layer 30. The thickness of the insulating layer 30 is generally within 3um, and the substrate layer itself has a certain resistivity (1-3000ohm-cm), which may be regarded as a conductor with low conductivity. Furthermore, since the waveguide structure 210 is silicon with certain doping, the electrical characteristic thereof is close to a conductor, which makes a parallel plate capacitor to form between the silicon layer where the waveguide structure 210 is located and the substrate layer. The parallel plate capacitor has a large parasitic capacitance, which causes a significant reduction in the bandwidth and impedance of the optical modulator, and degrades the performance of the traveling wave electrode modulator. In this regard, the new optical modulation layer according to the embodiment of the present application removes the original substrate layer, so that the silicon layer where the waveguide structure 210 is located may no longer form a parallel plate having the substrate layer, that is, the parasitic capacitance between the waveguide structure 210 and the substrate is eliminated, which avoids an issue of reduced bandwidth and impedance of the optical modulator caused by parasitic capacitance, thereby improving the modulation performance of the optical modulator. In addition, since the new optical modulator having the "sandwich" structure is surrounded in the cage enclosed by the first shielding structure 510 and the second shielding structure 520 of the shielding structure 50, the cage is an equipotential body, that is, a Faraday cage. Therefore, the shielding structure 50 may limit the electromagnetic radiation of the optical modulator in the cage, and may also limit the external electromagnetic radiation outside the cage, which effectively shields the electromagnetic radiation of the optical modulator, and reduces the interference of external electromagnetic radiation on the optical modulator. The electromagnetic shielding between the optical modulator and the external environment is achieved, thereby improving the modulation performance of the optical modulator. Moreover, the shielding structure 50 may be simultaneously deposited during the process of forming the optical modulator structure, without the need to add additional process steps after the optical modulator is manufactured. Compared with the method in the related art of adding structures to form electromagnetic shielding through mounting and wire bonding after the optical modulator is made, a solution according to this embodiment has fewer process steps and a better shielding effect.

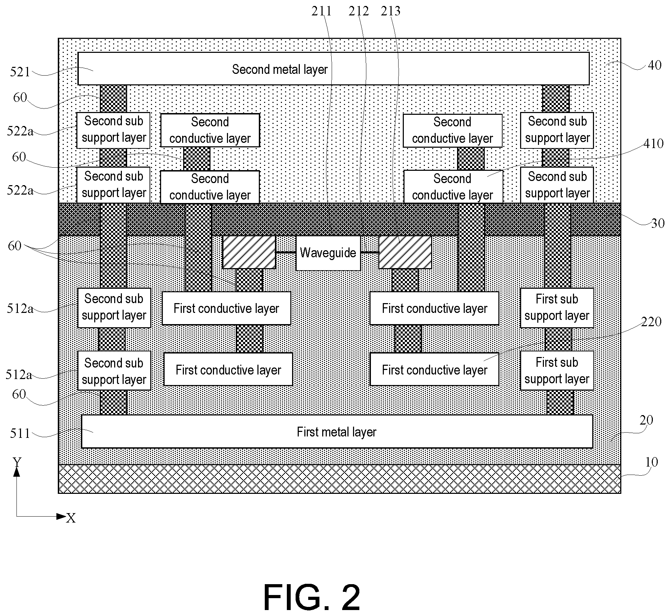

Referring to FIG. 1 continuously, the first shielding structure 510 may include a first metal layer 511 and a first support layer 512 located in the second dielectric layer 20. The first metal layer 511 is located on a side of the first conductive layer 220 away from the insulating layer 30. The first support layer 512 is located on both sides of the first conductive layer 220. The first metal layer 511 is electrically connected to the first support layer 512 by the via hole 60. An orthogonal projection of the first conductive layer 220 toward the insulating layer 30 is located within an orthogonal projection of the first metal layer 511 toward the insulating layer 30. Exemplarily, in the XY section view shown in FIG. 2, the first conductive layer 220 is located on a side of the first metal layer 511 away from the first dielectric layer 10.

Exemplarily, the second shielding structure 520 may include a second metal layer 521 and a second support layer 522 located in the third dielectric layer 40. The second metal layer 521 is located on a side of the second conductive layer 420 away from the insulating layer 30. The second support layer 522 is located on both sides of the second conductive layer 410. The second metal layer 521 is electrically connected to the second support layer 522 by the via hole 60. An orthogonal projection of the second conductive layer 410 toward the insulating layer 30 is located within an orthogonal projection of the second metal layer 521 toward the insulating layer 30. Exemplarily, in the XY section view shown in FIG. 2, the second conductive layer 410 is located on a side of the second metal layer 521 close to the insulating layer 30.

In the optical modulator mentioned above, the first metal layer 511, the first support layer 512, the second metal layer 521, and the second support layer 522 enclose to form a four-sided Faraday cage to surround the waveguide structure 210, the first conductive layer 210, and the second conductive layer 410, so that the electromagnetic radiation of the modulator does not escape outside the cage, and external electromagnetic radiation does not radiate into the cage to cause interference to the modulator, thereby improving the modulation performance of the modulator. It should be noted that the shielding structure 50 may also be a complete surrounding structure with six sides, to surround the waveguide structure 210, the first conductive layer 210, and the second conductive layer 410 in the cage completely, thereby achieving a better shielding effect.

Referring to FIG. 2, the first support layer 512 may include at least two first sub support layers 512a arranged at intervals. Each first sub support layer 512a is located in the second dielectric layer 20. Each first sub support layer 512a is respectively located on both sides of the first conductive layer 220. One first sub support layer 512a is electrically connected to the first metal layer 511 by the via hole 60, another first sub support layer 512a is electrically connected to the second support layer 522 of the second shielding structure 520 by the via hole 60, and two adjacent first sub support layers 512a are electrically connected by the via hole 60. Exemplarily, the second support layer 522 may include at least two second sub support layers 522a arranged at intervals. Each second sub support layer 522a is located in the third dielectric layer 40. Each second sub support layer 522a is respectively located on both sides of the second conductive layer 410. One second sub support layer 522a is electrically connected to the second metal layer 522 by the via hole 60, another second sub support layer 522a is electrically connected to the first support layer 511 of the first shielding structure 510 by the via hole 60, and two adjacent second sub support layers 522a are electrically connected by the via hole 60. Based on this, the first sub support layers 512a located on both sides of the first conductive layer 220, the second sub support layers 522a located on both sides of the second conductive layer 410, together with the first metal layer 511 and the second metal layer 521 constitute a shielding structure 50 with four sides.

Exemplarily, the first sub support layers 512a may be located around the first conductive layer 220, and the second sub support layers 522a may be located around the second conductive layer 410. Based on this, together with the first metal layer 511 and the second metal layer 521, a shielding structure 50 with six sides is constituted.

In the optical modulator mentioned above, the first shielding structure 510 may include the first metal layer 511 and the first sub support layers 512a. The second shielding structure 520 may include the second metal layer 521 and the second sub support layers 522a to form a shielding structure 50 with four sides or six sides to surround the waveguide structure 210, the first conductive layer 210, and the second conductive layer 410 in the cage, which shields the electromagnetic interference between the optical modulator and the external environment, and improves the modulation performance of the optical modulation. In addition, each sub support layer of the shielding structure 50 may be completed during the deposition process of forming each conductive layer, without the need to add additional process steps after the optical modulator is completed. Compared with adding structures to form electromagnetic shielding through methods such as mounting and wire bonding after the optical modulator is made, the optical modulator provided by the embodiments of the present application has lower manufacturing process difficulty and simpler process flow.

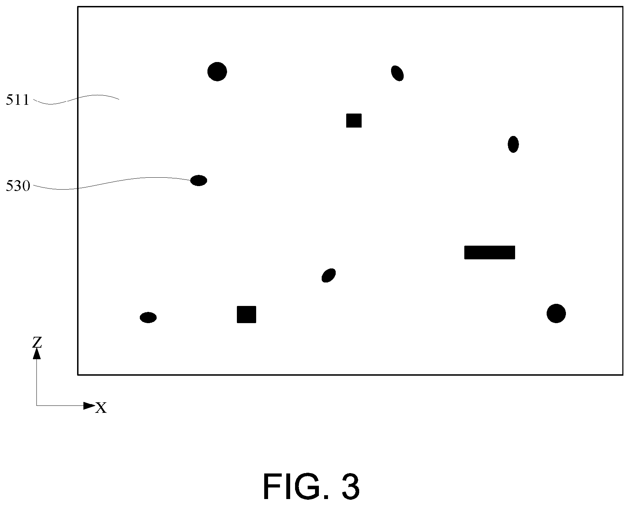

In an embodiment, as shown in FIG. 3, since the shielding principle of the Faraday cage allows the shielding structure 50 not to be a complete plane, the shielding structure 50 may be provided with a hollow structure 530, which is a complete surrounding structure in the XY section view, and a separated structure in the XZ section view. Exemplarily, the hollow structure 530 may be provided on any one of the first metal layer 511 and the second metal layer 521. In practical applications, non-metallic materials may be filled in the hollow structure of each metal layer, so that the metal layer is a discontinuous plate structure.

The hollow structure 530 may be in any shape, such as circular, elliptical, square, rectangular, or irregular. The shielding structure 50 may be provided with one or more shapes of hollow structures 530. Exemplarily, when the hollow structure 530 is in the circular shape, a diameter of the circular hollow structure 530 is less than 1/4 wavelength of the electromagnetic wave transmitted by the modulator; when the hollow structure is in the rectangular shape, a length of the rectangular hollow structure 530 is less than 1/4 wavelength of the electromagnetic wave transmitted by the modulator. That is, the maximum size of the hollow structure is less than 1/4 wavelength of the electromagnetic wave transmitted by the modulator, where the electromagnetic wave referred to here is the electromagnetic wave of the maximum frequency transmitted by the optical modulator. Optionally, the maximum size of the hollow structure 530 is less than 300 µm, for example, the diameter of the circular hollow structure 530 is less than 300 µm, and the long side dimension of the rectangular hollow structure 530 is less than 300 µm.

The hollow structures 530 may be periodically arranged on the shielding structure 50, or may be irregularly arranged. Exemplarily, taking the first metal layer 511 having elliptical, circular, and rectangular hollow structures 530 as an example, the hollow structures 530 are irregularly arranged on the first metal layer 511, and the section view of the first metal layer 511 in the XZ axis is shown in FIG. 3. Exemplarily, the hollow structures 530 may also be periodically arranged, so that the metal layer is in a grid or mesh shape. The hollow structure 530 may be disposed accordingly based on practical application scenarios, and are not limited herein.

In the modulator according to the aforementioned embodiments, the shielding structure 50 may be provided with the hollow structure 530, which reduces the process requirements, and further improves the modulation performance of the modulator while the electromagnetic radiation between the external and the modulator is effectively shielded.

The technical features of the aforementioned embodiments may be combined in any manner. For the sake of brevity, not all possible combinations of the technical features of the aforementioned embodiments are described. However, as long as there is no contradiction in the combinations of these technical features, they should be considered as within the scope described in this specification.

The aforementioned embodiments only express several implementation modes of the utility model, and the descriptions thereof are relatively specific and detailed, but should not be understood as limiting the scope of the utility model patent. It should be noted that for those skilled in the art, several modifications and improvements may be made without departing from the concept of the utility model, and fall within the protection scope of the utility model. Therefore, the protection scope of the utility model patent shall be subject to the appended claims.

## Claims

1. An optical modulator, comprising:
a first dielectric layer;
a second dielectric layer, located on the first dielectric layer, wherein a waveguide structure and a first conductive layer are provided in the second dielectric layer, the waveguide structure is electrically connected to the first conductive layer by a via hole, and the first conductive layer is configured to modulate light transmitted by the waveguide structure;
an insulating layer, located on the waveguide layer;
a third dielectric layer, located on the insulating layer, wherein a second conductive layer is provided in the third dielectric layer, the second conductive layer is electrically connected to the first conductive layer by a via hole;
a shielding structure, comprising a first shielding structure and a second shielding structure electrically connected to each other, wherein the first shielding structure is located in the second dielectric layer, the second shielding structure is located in the insulating layer and the third dielectric layer, the first shielding structure and the second shielding structure enclose to form a cage, and the waveguide structure, the first conductive layer, and the second conductive layer are located in the cage.

2. The optical modulator according to claim 1, wherein the second conductive layer is electrically connected to the waveguide structure by a via hole, each of the plurality of first conductive layers, and each of the plurality of first conductive layers is stacked in a direction from the insulating layer toward the first dielectric layer.

3. The optical modulator according to claim 1, wherein one of the plurality of second conductive layers is adjacent to the insulating layer and is electrically connected to the first conductive layer by a via hole, and each of the second conductive layers is stacked in a direction from the first dielectric layer toward the insulating layer.

4. The optical modulator according to claim 1, wherein a total number of layers of the first conductive layer and the second conductive layer ranges from 6 to 8 layers.

5. The optical modulator according to claim 1, wherein the first dielectric layer is a silicon layer or a glass material layer.

6. The optical modulator according to claim 1, wherein the first dielectric layer is formed on the second dielectric layer through bonding.

7. The optical modulator according to claim 1, wherein the first shielding structure comprises a first metal layer and a first support layer located in the second dielectric layer, the first metal layer is located on a side of the first conductive layer away from the insulating layer, the first support layer is located on both sides of the first conductive layer, the first metal layer is electrically connected to the first support layer by a via hole; and an orthogonal projection of the first conductive layer toward the insulating layer is located within an orthogonal projection of the first metal layer toward the insulating layer;
the second shielding structure comprises a second metal layer and a second support layer located in the third dielectric layer, the second metal layer is located on a side of the second conductive layer away from the insulating layer, the second support layer is located on both sides of the second conductive layer, the second metal layer is electrically connected to the second support layer by a via hole, and an orthogonal projection of the second conductive layer toward the insulating layer is located within an orthogonal projection of the second metal layer toward the insulating layer.

8. The optical modulator according to claim 7, wherein the first support layer comprises at least two first sub support layers arranged at intervals, the at least two first sub support layers are located in the second dielectric layer, and the at least two first sub support layers are located on both sides of the first conductive layer respectively.

9. The optical modulator according to claim 7, wherein the second support layer comprises at least two second sub support layers arranged at intervals, the at least two second sub support layers are located in the third dielectric layer, and the at least two second sub support layers are located on both sides of the first conductive layer respectively.

10. The optical modulator according to claim 1, wherein the shielding structure is provided with a hollow structure, and a hollow size of the hollow structure is less than 1/4 wavelength of electromagnetic waves transmitted by the optical modulator.

11. The optical modulator according to claim 1, wherein the insulating layer and the third dielectric layer are made of a same material.

12. The optical modulator according to claim 1, wherein the shielding structure is insulated and separated from the first conductive layer and the second conductive layer.
